# EUROPEAN PATENT APPLICATION

(11) **EP 1 307 037 A1**
(43) Date of publication of application: **02.05.2003**
(21) Application number: 01610110.7
(22) Date of filing: 29.10.2001
(51) Int. Cl.: H04M 3/42, H04M 15/28, H04M 15/30, H04M 1/725, H04M 1/247

(54) **Method and means for handling the use of services**

(71) Applicant: Telefonaktiebolaget L M Ericsson (Publ), 126 25 Stockholm (SE)
(72) Inventor: Birgerson, Joakim, 246 36 Löddeköpinge (SE); Sandahl, Christer, 227 30 Lund (SE)
(74) Representative: Sundien, Thomas

(57) **Abstract**

A method of collecting, storing and retrieving statistical information about use of at least one specified service (3) for a user communication device, said service (3) being provided by a specified service provider (2). The method comprises the steps of internally in the user communication device collecting specified statistical information about the use of the specified service (3), storing said statistical information in a database (7), and giving access to said statistical information stored in said database (7) to the user and to a specified service provider (2) providing the specified service (3).

A method of billing a user is also provided as well as an arrangement and a transaction server (6) for use in said methods.

## Description

### Technical field

The invention relates to a method and means for collecting, storing, retrieving and using statistical information about use of specified services via a user communication device.

### Related prior art

Services available for communication devices, such as mobile telephones, PCs, stationary telephones, etc., can be divided in two: internal services and external services. Internal services are services that are applicable independent of any communication network, i.e. services integrated in or connected to the communication device and immediately applicable as such. External services are services that are applicable only in connection with an external network, i.e. services that are dependent on applications external to the communication device. Examples of internal services are games, text processing programs, phone books, etc. None of these services require any external connection to other appliances in order to be used. Examples of external services are telephone calls, searches on the Internet, "show incoming number" services for telephones, etc. These services all require a connection between the communication device and one or more service providers that provides the specified services.

Today, the use of external services is to a high degree limited by one service provider: the operator, who owns or leases the communication lines needed. In fact, all communication between the user and a desired service provider is controlled by the operator who also is in a position to bill the user for use of the communication line and for use of other services offered by the operator. In this way the operator can be said to sit as a spider in the web since the user is fully dependent on the operator and since the operator is in charge of collecting and storing statistical information about the use of specified services that later are to be billed to the user.

It is possible for the user to collect and store certain statistical information (e.g. time used in connection with telephone conversations) so that the bill from the operator can be checked against this information. However, the possibilities are very limited and the operator may operate with different prices at different times of the day and may offer a wide range of special agreements which makes it very difficult to check the correctness of the bill.

Mostly, the manufacturer of the user's communication device provides the communication device with a certain number of services immediately applicable. An example of such services is the "show number" service in a telephone, either a mobile telephone or a stationary telephone. This service would often be immediately applicable from the manufacturer of the telephone. However, the service will only be available for the user of the telephone if the operator owing or leasing the telephone line offers the "show number" service to its customer, mostly by requiring a fee for the service. Again, the user is dependent on the operator.

It is also possible for the user to get or buy service products, such as computer programs or external devices that can be connected to the user's communication device for performing specified operations, which, after they are installed or connected to the communication device, can be used for that specified service free of charge. Examples of such service products are computer programs that can be installed in the communication device from a CD-rom or downloaded from e.g. the Internet, and external devices, such as web cameras, MP3 player, radios, etc. that are connectable to the user's communication device and which then can be used free of charge. An operator owing or leasing the communication line may though bill the user if that communication line is used in connection with the use of the service product.

### Object of the invention

The manufacturers of communication devices and of service products usable with the communication device have an interest in obtaining statistical information about the use of such devices or services. Such statistical information shows the user's use of the devices or services and this information is very useful for the manufacturer in developing new devices or services since it may reflect new needs and wishes from the user.

A further advantage for the manufacturer of devices or services is that the statistical information about the use of the devices or services can be used for billing the user for the use of these specified devices or services. This opportunity will prompt the manufacturer even more to develop new devices or services that in turn gives the user an even wider range of products or services to chose between.

Finally, the statistical information about the use of specified devices or services should be available for the user. Thereby the user can check the use of the devices and services for his own information and can also check the correctness of any bill sent from a service provider or a service provider collaborator.

It is therefore an object of the invention to provide a method and means for making the use of specified services available for the user of the communication device without being dependent on a single operator owing or leasing the communication lines needed, and furthermore to make it possible for the service providers providing the specified services to measure and possibly billing the use of these specified services.

### Summary of the invention

The object of the invention is achieved by a method of collecting, storing and retrieving statistical information about use of at least one specified service for a user communication device, said service being provided by a specified service provider, said method comprises the steps of:
- internally in the user communication device collecting specified statistical information about the use of the specified service,
- storing said statistical information in a database,
- giving access to said statistical information stored in said database to the user and to a specified service provider providing the specified service.

Thereby it is obtained that all statistics about the use of the specified service or services are collected by the user communication device and stored in a database from where the user and the service provider can extract information about the specified use. The user may use this information to check the bill from the service provider, and the service provider may use the information as feed back on the offered services or in connection with designing new services or for billing the user for use of the specified services.

In a first embodiment the statistical information is stored in a database that is integrated in the user communication device. This means that the service provider must have access to the user's communication device in order to extract relevant data. Thereby the user will be "sitting like a spider in the web", since all informations are stored in the user's communication device.

In another embodiment the statistical information is transmitted to and stored in a database located externally in relation to the user communication device, preferably at a server connected to an infranet, such as the Internet, from where the user as well as the service provider can retrieve relevant statistical information. In this embodiment the database would typically be owned by a service provider.

Preferably the user communication device is a mobile radio station, such as a mobile telephone.

In another method according to the invention the service provider specifically uses the statistical information retrieved from the database to bill the user for use of the specified services.

Furthermore, the invention specifies an arrangement of devices for collecting, storing and retrieving statistical information about use of at least one specified service provided by a service provider, which arrangement comprises a user communication device using the specified service. This arrangement further comprises:
- a transaction server integrated in the user communication device, said transaction server being able to collect and at least temporarily store said statistical information, said user communication device having access to the stored statistical information, and
- a service provider communication device having access to the stored statistical information.

With this arrangement it is possible to carry out the methods described above resulting in the mentioned advantages for the user and for the service provider.

The user communication device is preferably provided with means for transmitting the statistical information to a database to which service provider communication device has access to said database. The database may be integrated in the user communication device or it can be located externally in relation to the user communication device, e.g. at a server connected to an infranet, such as the Internet.

The invention also specifies a transaction server integrated in the user communication device for collecting and at least temporarily storing statistical information about use of at least one specified service by a user communication device, which transaction server giving access to a user and to a service provider to retrieve statistical information collected by said transaction server about a service provided by said service provider.

It shall be emphasised that the term "comprise/comprising" when used in this specification is taken to specify the presence of stated features, integers, steps or components but does not preclude the presence or addition of one or more other features, integers, steps components or groups thereof.

Furthermore, the term "service/services" when used in this specification is taken to mean services, products or devices made available to the user from a manufacturer or any kind of service provider.

Also the term "service provider" when used in this specification is taken to mean any person or company that offers and/or are in charge of and/or are responsible for certain service provided for a user, e.g. a manufacturer, a distributor, an operator, etc., and any collaborators of such persons or companies.

### Description of the drawings

The invention will be described in detail in the following with reference to the drawings in which
Fig. 1 shows in a simplified manner the relationship between the user and a service provider operating in a method according to a first embodiment of the invention,
Fig. 2 shows in a simplified manner the relationship between the user and a service provider operating in a method according to a second embodiment of the invention,
Fig. 3 shows a third exemplified embodiment of the invention, and
Fig. 4 shows a fourth exemplified embodiment of the invention.

### Detailed description of embodiments of the invention

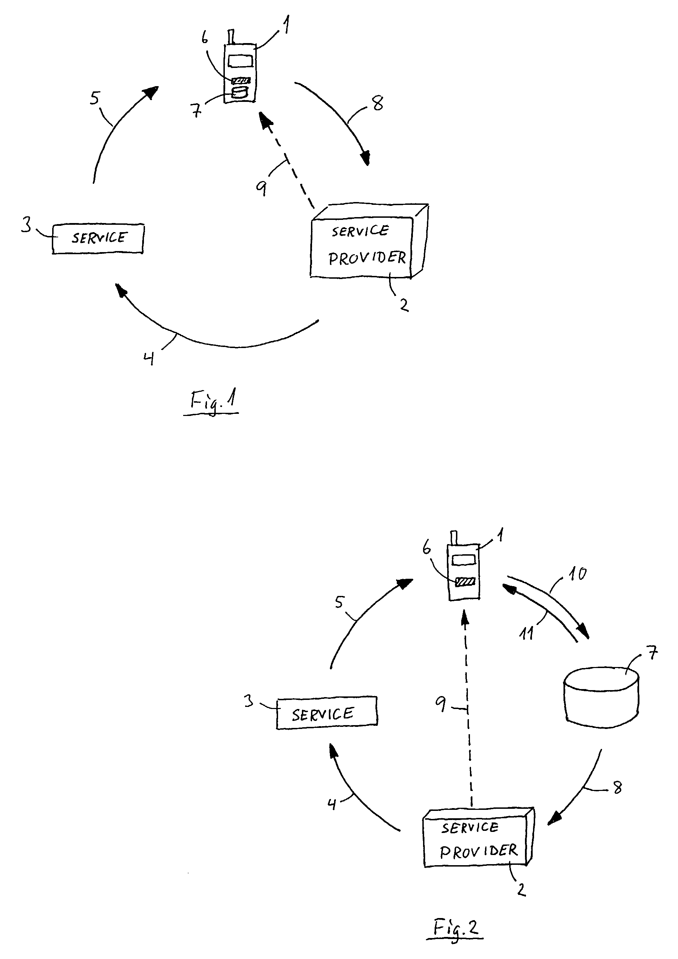

Fig. 1 shows in a first embodiment of the invention the relationship between the user of a communication device such as a mobile telephone 1 and a service provider 2 offering a service 3 that is used by the user of the mobile telephone 1. In Fig. 1 the mobile telephone 1 represents any kind of communication device as well as the user using the communication device.

The service provider 2 represents any supplier of a service 3, i.e. the service provider 2 could be an operator of a communication line, a manufacturer of devices usable in connection with the mobile telephone 1, a manufacturer of the mobile telephone 1, a software developer offering a certain software for use in the mobile telephone 1, etc.

The service 3 can be any kind of service or device that is usable in connection with the mobile telephone 1. Examples of services 3 are open communication lines, a device usable in connection with the mobile telephone, e.g. MP3 player, web camera, radio, and software that can be stored in the mobile telephone.

The solid arrow 4 indicates that the service provider 2 offers the service 3, and the solid arrow 5 indicates that the user (the mobile telephone 1) uses the service 3. A transaction server 6 for collecting and storing statistical information about the use of the service 3 is integrated in the mobile telephone 1. The statistical information collected by the transaction server 6 is stored in a database 7 also integrated in the mobile telephone 1.

According to the invention the service provider 2 has access to the collected and stored data about the use of the service 3 offered by the service provider 2. This is indicated by the solid arrow 8. This information is very useful for the service provider 2 in relation to developing new services to be offered to the user and it also gives the service provider a possibility to bill the user for the use of the offered service 3. The billing of the user is indicated by the dotted arrow 9.

In accordance with the invention the statistic information about the use of the specified service 3 is collected by the transaction server 6 integrated in the mobile telephone 1 and is stored in the database 7 which in this first embodiment also is integrated in the mobile telephone 1. This means that all transaction concerning the use of the specified service 3 are registered in the mobile telephone 1, i.e. the user sits on all the statistical information about the use of the service 3. Preferably, the user has immediately access to the information so collected and stored. If the service provider 2 is an operator who owns or leases communication lines he will be able to collect information about the use of these communication lines. However, in accordance with the invention the billing of the use of the communication lines is preferably based on the information that can be extracted from the database 7. Since information about the use of any specified service is collected and stored by the user (more precisely by the mobile telephone 1) the user may have full information about the data on which a bill from a service provider 2 is based. This also means that the user will be able to check the bill from the service provider 2 since he has access to the data on which the bill is based.

Fig. 2 shows in a second embodiment of the invention the relationship between the user of a communication device such as a mobile telephone 1 and a service provider 2 offering a service 3 that is used by the user of the mobile telephone 1. It should be noted that the same reference numerals as used in Fig. 1 are used for like parts in Fig. 2 and in further Figures.

The only difference between the embodiments shown in Fig. 1 and Fig. 2 is that the database 7 is positioned outside the mobile telephone 1. In this embodiment the mobile telephone 1 only comprises the transaction server that collects and temporarily stores the statistical information about the use of the specified service 3. Whenever possible the transaction server transmits the temporarily stored data to the database 7 so that the database 7 is as updated as possible.

As in Fig. 1 the solid arrow 4 indicates that the service provider 2 offers the service 3, and the solid arrow 5 indicates that the user (the mobile telephone 1) uses the service 3. A transaction server 6 for collecting and temporarily storing statistical information about the use of the service 3 is integrated in the mobile telephone 1. The statistical information collected by the transaction server 6 is transmitted to the database 7 as indicated by the solid arrow 10.

The service provider 2 has access to the database 7 as indicated by the solid arrow 8, and he may bill the user for the use of the offered service 3 as indicated by the dotted arrow 9. Additionally, the user has access to the database 7 via the mobile telephone 1 as indicated by the solid arrow 11. Thereby the user will be able to check the bill from the service provider 2 since he has access to the data on which the bill is based.

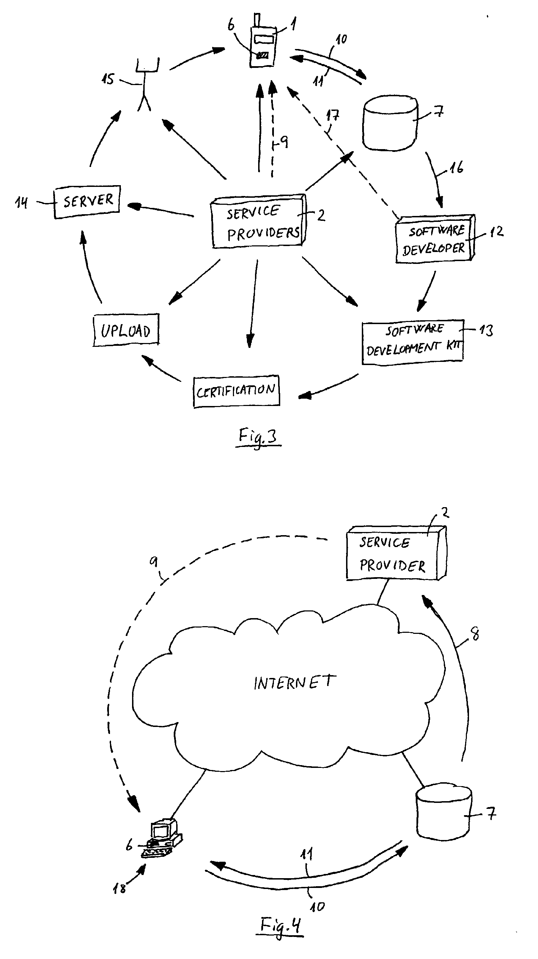

Fig. 3 shows an example of the roles of different parties in relation to development and usage of a software product. As in Figs. 1 and 2 there is shown a mobile telephone 1 provided with an integrated transaction server 6 operating as described above. The external database 7 is also present. At the centre of Fig. 3 a box denotes a number of service providers 2 operating in the shown environment as it will be described later.

The user has a mobile telephone 1 manufactured by a manufacturer of mobile telephones and this manufacturer is a first service provider included in the box of service providers 2. The solid arrow between the box of service providers 2 and the mobile telephone 1 indicates that the manufacturer provides the mobile telephone 1 to the user. The database 7 is provided by a second service provided in the box of service providers 2 which could be but necessarily are the same service provider as the first service provider, i.e. the manufacturer of the mobile telephone 1. The solid arrow between the box of service providers 2 and the database 7 indicates that the database is provided by a service provider. The solid arrow 10 indicates that statistical information about the use of specified services are transmitted to the database 7 from the mobile telephone 1, and the solid arrows 8 and 11 indicates that the statistical information is available for the service providers 2 and the user, respectively. The dotted arrow 9 indicates that the service providers 2 may bill the user for use of the specified services based on the information extracted from the database 7. This part of Fig. 3 corresponds to Fig. 2.

If a software developer 12 wishes to develop new software for use in the mobile telephone 1 and wishes to be able to have statistical information about the use of this software he must have knowledge of the interface to the transaction server 6 integrated in the mobile telephone 1. This interface may be of any generally known type so that the new software having a standard interface is immediately applicable in the mobile telephone 1. In the preferred embodiment, however, the manufacturer of the mobile telephone 1 provides a software development kit 13 that must be used in designing the new software for the mobile telephone 1.

When the software is finished it is certificated and uploaded to a server 14 from where it can be downloaded to the mobile telephone 1 via wireless communication symbolized by the antenna 15. Preferably the server 14 is accessible via an infranet (e.g. the Internet, an intranet or an extranet).

In all the steps from the development of the software to the use of the software in the mobile telephone 1 and even to the feed back to the software developer 12 from the database 7 as indicated by the solid arrow 16 service providers 2 are present. This is indicated by all the solid arrows emanating from the box of service providers 2. For instance, the service provider who provides access to a network from the mobile telephone 1 via the antenna 15 corresponds to the present operators of communication lines. It may be different service providers 2 that offers the different services described above. All service providers may put a tag on the software and since the software is designed using the software development kit 13 which is compatible with the transaction server 6 in the mobile telephone, the transaction server 6 can transmit statistical information related to all the service providers 2 involved to the database 7. All service providers 2 having access to the database 7 can therefore extract information about the use of their specified services and possibly bill the user for such use. This is indicated by the solid arrow 8 and the dotted arrow 9.

The software developer 12 is also a service provider, since he provides the specific software usable in the mobile telephone 1. Therefore, the software developer 16 will also be able to bill the user for any use of the specific software as indicated by the dotted arrow 17.

Fig. 4 shows yet another embodiment of the invention. In this embodiment the user's communication device is a PC (Personal Computer) 18 connected to the Internet. Again a transaction server 6 is integrated in the PC 18 and it collects all transactions related to specified services provided by one or more service providers 2. The collected data is transmitted, preferably via the Internet, to a database 7 located on a server connected to the Internet as indicated by the solid arrow 10. The user as well as the service provider 2 have access to relevant contents of the database as indicated by solid arrows 8 and 11, and the service provider 2 may use this information for billing the user for use of specified services provided by the service provider 2 as indicated by the dotted arrow 9. Of course, there may be more than one service provider 2 as was the case shown in Fig. 3. The user communication device need not be a PC, but might as well be a mobile telephone as shown in Figs. 1-3 or any other type of communication device.

The invention has been described with emphasis on the possibility for the service providers to bill a user for the use of specified services. This is, however, only one advantage for the service providers in having access to statistical information about the use of specified services. For many service providers such statistical information is valuable in evaluating services provided and in the development of new services. For instance, it lies within the scope of the present invention to transmit information about malfunction of certain services to the database. The service provider who has provided the malfunctioning service then has access to data concerning the malfunctioning and he may take any necessary steps in relation to the user in order to correct the service if possible.

## Claims

1. A method of collecting, storing and retrieving statistical information about use of at least one specified service (3) for a user communication device, said service (3) being provided by a specified service provider (2), **characterised in that** said method comprises the steps of:
- internally in the user communication device collecting specified statistical information about the use of the specified service (3),
- storing said statistical information in a database (7),
- giving access to said statistical information stored in said database (7) to the user and to a specified service provider (2) providing the specified service (3).

2. A method according to claim 1, **characterised in that** the statistical information is stored in a database (7) that is integrated in the user communication device.

3. A method according to claim 1, **characterised in that** the statistical information is transmitted to and stored in a database (7) located externally in relation to the user communication device.

4. A method according to claim 3, **characterised in that** the statistical information is transmitted to and stored in a database (7) located at a server connected to an infranet, such as the Internet.

5. A method according to claim 4, **characterised in that** said service provider (2) retrieves the statistical information from said database (7) located at a server connected to an infranet, such as the Internet.

6. A method according to any one of claims 1-5, **characterised in that** the user communication device is a mobile radio station, such as a mobile telephone (1).

7. A method of billing a user for the use of at least one specified service (3) for a user communication device, said service (3) being provided by a specified service provider (2), **characterised in that** said method comprises the steps of:
- internally in the user communication device collecting specified statistical information about the use of at least one billable specified service (3),
- storing said statistical information in a database (7),
- giving access to said statistical information stored in said database (7) to the user and to said specified service provider (2) providing the specified service,
- billing the user by the specified service provider (2) for the use of the specified service (3).

8. A method according to claim 7, **characterised in that** the statistical information is stored in a database (7) that is integrated in the user communication device.

9. A method according to claim 7, **characterised in that** the statistical information is transmitted to and stored in a database (7) located externally in relation to the user communication device.

10. A method according to claim 9, **characterised in that** the statistical information is transmitted to and stored in a database (7) located at a server connected to an infranet, such as the Internet.

11. A method according to claim 10, **characterised in that** said service provider (2) retrieves the statistical information from said database (7) located at a server connected to an infranet, such as the Internet.

12. A method according to any one of claims 7-11, **characterised in that** the user communication device is a mobile radio station, such as a mobile telephone (1).

13. An arrangement of devices for collecting, storing and retrieving statistical information about use of at least one specified service (3) provided by a service provider (2), said arrangement comprising a user communication device using the specified service (3), **characterised in that** said arrangement further comprises:
- a transaction server (6) integrated in the user communication device, said transaction server (6) being able to collect and at least temporarily store said statistical information, said user communication device having access to the stored statistical information, and
- a service provider communication device having access to the stored statistical information.

14. An arrangement according to claim 13, **characterised in that** user communication device is provided with means for transmitting the statistical information to a database (7), and that the service provider communication device has access to said database (7).

15. An arrangement according to claim 14, **characterised in that** said database (7) is integrated in the user communication device.

16. An arrangement according to claim 14, **characterised in that** said database (7) is located externally in relation to the user communication device.

17. An arrangement according to claim 16, **characterised in that** the database (7) is located at a server connected to an infranet, such as the Internet, and that the user communication device as well as the service provider communication device are connectable to said infranet.

18. An arrangement according to any one of claims 13-17, **characterised in that** the user communication device is a mobile radio station, such as a mobile telephone (1).

19. A transaction server (6) for collecting and at least temporarily storing statistical information about use of at least one specified service (3) by a user communication device, said transaction server (6) giving access to a user and to a service provider (2) to retrieve statistical information collected by said transaction server (6) about a service (3) provided by said service provider (2), **characterised in that** the transaction server (6) is integrated in the user communication device.

20. A transaction server according to claim 19, **characterised in that** it is capable of transmitting said statistical information to a database (7) integrated in the user communication device and to which said service provider (2) has access.

21. A transaction server according to claim 19, **characterised in that** it is capable of transmitting said statistical information to a database (7) external of the user communication device and to which said service provider (2).

22. A transaction server according to any one of claims 19-21, **characterised in that** it is integrated in a mobile radio station, such as a mobile telephone (1).
